# EUROPEAN PATENT APPLICATION

(11) **EP 4 391 098 A1**
(43) Date of publication of application: **26.06.2024**
(21) Application number: 23180605.0
(22) Date of filing: 21.06.2023
(51) Int. Cl.: H01M 4/04, H01M 4/134, H01M 4/1395, H01M 4/46, H01M 4/80, H01M 4/02

(54) **NEGATIVE ELECTRODE STRUCTURE APPLIED TO ALUMINUM BATTERY**

(30) Priority: 23.12.2022 TW 111149653
(71) Applicant: APh ePower Co., Ltd., Kaohsiung City 821 (TW)
(72) Inventor: WU, Jui-Hsuan, 821 Kaohsiung City (TW); TSAI, Shih Po Ta, 821 Kaohsiung City (TW); YANG, Chun-Chieh, 821 Kaohsiung City (TW)
(74) Representative: Becker, Eberhard

(57) **Abstract**

A negative electrode structure (100, 100A) applied to an aluminum battery includes a metal base (110) and multiple holes (120). The holes (120) are disposed on a surface of the metal base (110). The pore size of each of the holes (120) ranges from 0.05 micrometers (µm) to 500 µm.

## Description

### BACKGROUND

### Technical Field

The disclosure relates to a negative electrode structure applied to an aluminum battery.

### Description of Related Art

Generally speaking, an aluminum battery is composed of a positive electrode, a negative electrode, a separator and an electrolyte, and the material of the negative electrode usually uses metal aluminum foil. Furthermore, in the process of continuous charging and discharging of the aluminum battery, the electrolyte produces electrochemical deposition on the negative electrode through redox. However, the metal aluminum foil is prone to react with oxygen, resulting in the surface of the metal aluminum foil being covered by an oxide layer. Moreover, deposits after electrochemistry also cover the surface of the metal aluminum foil. In this way, the above-mentioned oxide layer and deposits slow down the electrochemical deposition on the surface of the negative electrode, reduce the electrochemical reaction capability of the negative electrode, and further affect the electric quantity and performance of the aluminum battery.

On the other hand, when the metal aluminum foil cannot carry out the electrochemical reaction smoothly, the electrochemical reaction is easily transferred to the separator to be carried out, causing metal deposition in the separator, and further conducting the positive and negative electrodes and causing a short circuit of the battery, which affects the life and performance of the battery. Therefore, how to design a better negative electrode structure to improve the electric quantity, life and performance of the aluminum battery is a real challenge.

### SUMMARY

The disclosure provides a negative electrode structure applied to an aluminum battery, which may improve the electric quantity, life and performance of the aluminum battery.

A negative electrode structure applied to an aluminum battery of the disclosure includes a metal base and multiple holes. The holes are disposed on a surface of the metal base. The pore size of each of the holes ranges from 0.05 micrometers (µm) to 500 µm.

In an embodiment of the disclosure, the material of the aforementioned metal base includes aluminum, nickel, copper, titanium, tin, zinc, stainless steel, alloys thereof, or combinations thereof.

In an embodiment of the disclosure, the material of the above-mentioned metal base is aluminum.

In an embodiment of the disclosure, the above-mentioned holes are made by corrosion.

In an embodiment of the disclosure, the above-mentioned holes have different sizes, and the pore size is an average pore size.

In an embodiment of the disclosure, the above-mentioned average pore size ranges from 0.1 µm to 0.2 µm.

In an embodiment of the disclosure, the material of the above-mentioned metal base is nickel.

In an embodiment of the disclosure, the above-mentioned holes are made by electroplating or electroforming deposition.

In an embodiment of the disclosure, the above-mentioned negative electrode structure is a mesh structure.

In an embodiment of the disclosure, the above-mentioned holes have substantially the same size.

Based on the above, the negative electrode structure applied to the aluminum battery of the disclosure may increase the reaction area on the surface of the negative electrode and the replenishment speed of the electrolyte through the design of holes. Therefore, the electrochemical reaction capability of the negative electrode may be improved, and at the same time the problem of metal deposition in the separator may be slowed down, which in turn may improve the electric quantity, life and performance of the aluminum battery.

In order to make the aforementioned features and advantages of the disclosure comprehensible, embodiments accompanied with drawings are described in detail as follows.

### BRIEF DESCRIPTION OF THE DRAWINGS

FIG. 1A is a schematic diagram of a negative electrode structure according to an embodiment of the disclosure.
FIG. 1B is a schematic diagram of a negative electrode structure according to another embodiment of the disclosure.
FIG. 2 is a schematic diagram of the results of Embodiment 1, Embodiment 2, Comparative Example 1 and Comparative Example 2 in terms of electric quantity.
FIG. 3 is a schematic diagram of the results of Embodiment 3 and Comparative Example 3 in terms of electric quantity.

### DESCRIPTION OF THE EMBODIMENTS

Embodiments of the disclosure are described in detail below. However, these embodiments are exemplary, the disclosure is not limited thereto, and the disclosure is defined by the scope of the claims.

Exemplary embodiments of the disclosure are fully described below with reference to the drawings, but the disclosure may further be implemented in many different forms and should not be construed as limited to the embodiments described herein. In the drawings, for the sake of clarity, the sizes and thicknesses of regions, parts and layers may not be drawn in actual scale. In order to facilitate understanding, the same elements in the following description are described with the same symbols.

Directional terms (e.g., up, down, right, left, front, back, top and bottom) as used herein are merely used with reference to the drawings and are not intended to imply absolute orientation.

Unless otherwise defined, all terms (including technical and scientific terms) used herein have the same meaning as commonly understood by those of ordinary skill in the field to which the disclosure pertains.

A range may be expressed herein as from "about" one particular value to "about" another particular value, which may also be expressed directly as one particular value and/or to another particular value. When expressing the range, another embodiment includes from the one particular value and/or to the another particular value. Similarly, when a value is expressed as an approximation, by use of the antecedent "about," it will be understood that the particular value forms another embodiment. It will be further understood that an endpoint of each range is expressly relative or unrelated to another endpoint.

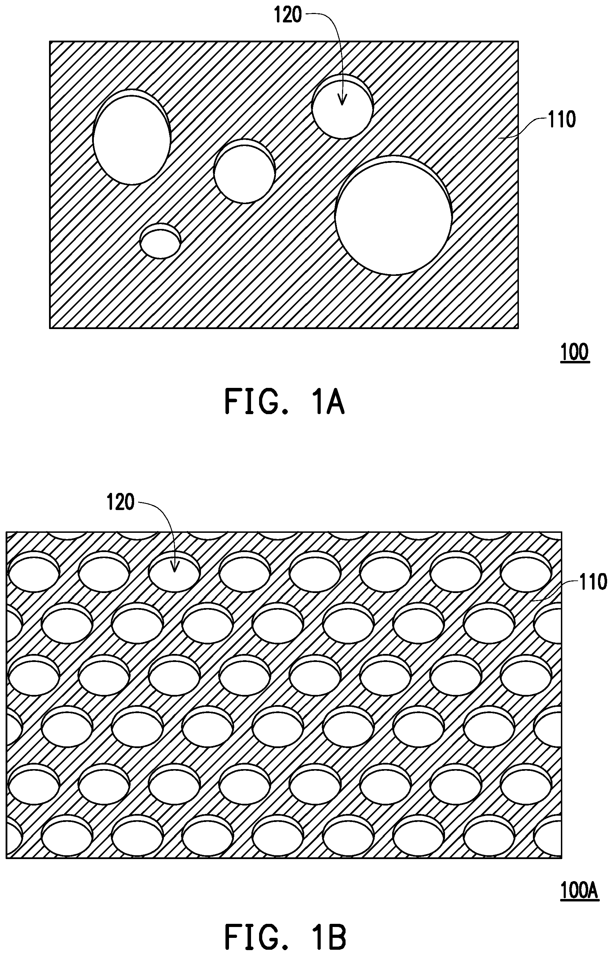

FIG. 1A is a schematic diagram of a negative electrode structure according to an embodiment of the disclosure. FIG. 1B is a schematic diagram of a negative electrode structure according to another embodiment of the disclosure.

Referring to FIGS. 1A and 1B, in the disclosure, a negative electrode structure applied to an aluminum battery (which may be a negative electrode structure 100 in FIG. 1A or a negative electrode structure 100A in FIG. 1B) includes a metal base 110 and multiple holes 120, and the holes 120 are disposed on the surface of the metal base 110. In addition, the pore size of each of the holes 120 ranges from 0.05 micrometers (µm) to 500 µm (for example, 0.05 µm, 0.1 µm, 0.2 µm, 1 µm, 5 µm, 10 µm, 15 µm, 20 µm, 25 µm, 30 µm, 40 µm, 50 µm or any value within the range of 0.05 µm to 50 µm), accordingly, the negative electrode structure applied to the aluminum battery of the disclosure may increase the reaction area on the surface of the negative electrode and the replenishment speed of the electrolyte through the design of the hole 120. Therefore, the electrochemical reaction capability of the negative electrode may be improved, and at the same time the problem of metal deposition in the separator may be slowed down, which in turn may improve the electric quantity, life and performance of the aluminum battery. Furthermore, through the design of the hole 120, the negative electrode structure applied to the aluminum battery of the disclosure may improve the capability of the electrolyte to enter the negative electrode, so as to effectively solve the problem caused by the conventional aluminum battery merely using metal aluminum foil. Furthermore, since the electrolyte of the aluminum battery participates in the negative electrode reaction, the concentration of the electrolyte increases and decreases. When the concentration of the electrolyte on the surface of the negative electrode is insufficient, the reaction performance is affected. Thus, the concentration of the electrolyte on the surface of the negative electrode directly affects the performance of the battery. Therefore, through the hole 120 of the negative electrode structure 100 of the disclosure may help the electrolyte enter the negative electrode, thereby improving the reaction capability. Therefore, compared with other batteries (such as a lithium battery) that the electrolyte does not participate in the reaction, the application of the negative electrode structure 100 of the disclosure to the aluminum battery may have a synergistic effect, but the disclosure is not limited thereto.

It should be noted that the hole 120 shown in FIGS. 1A and 1B may be formed merely on the metal base 110 without penetrating through the metal base 110, or the hole 120 may extend and penetrate from one surface of the metal base 110 to the other surface of the metal base 110.

In some embodiments, the material of the metal base 110 includes aluminum (Al), nickel (Ni), copper (Cu), titanium (Ti), tin (Sn), zinc (Zn), stainless steel, alloys thereof or combinations thereof, but the disclosure is not limited thereto. For example, as shown in FIG. 1A, the material of the metal base 110 of the negative electrode structure 100 is aluminum, and the holes 120 may be made by corrosion. Since the corrosion is based on reactivity, the holes 120 have different sizes. Therefore, the pore size ranging from 0.05 µm to 500 µm refers to an average pore size (diameter) range, and the average pore size ranges, for example, from 0.1 µm to 0.2 µm, but the disclosure is not limited thereto. In other embodiments, as shown in FIG. 1B, the material of the metal base 110 of the negative electrode structure 100A is nickel, and the holes 120 may be made by electroforming deposition and make the negative electrode structure 100 form a network structure. Due to the controllability of electroforming deposition, the holes 120 have substantially the same size. Therefore, the pore size ranging from 0.05 µm to 500 µm refers to a single pore size (diameter) range. In some embodiments, the pore size of the holes 120 formed by electroforming deposition ranges, for example, from 5 µm to 500 µm. It should be noted that the disclosure does not limit the formation method of the hole 120, and in other embodiments, the hole 120 may also be made by electroplating.

In some embodiments, the shape of the hole 120 may be a circle, a square, a rhombus, a hexagon, a polygon or a combination thereof, but the disclosure is not limited thereto.

In some embodiments, the negative electrode structure 100 is not a multilayer composite structure, that is, the negative electrode structure 100 is directly made holes on the metal base 110, rather than combining a metal film layer with another film layer that have holes. Therefore, the negative electrode structure 100 has the advantage of simple manufacturing process, but the disclosure is not limited thereto.

It should be noted that the disclosure is not limited to the above-mentioned metal bases and holes, nor does the disclosure limit other composition of the aluminum battery (such as the positive electrode, the separator and the electrolyte). As long as the negative electrode structure applied to the aluminum battery (an electrolyte using aluminum-based ions) includes a metal base and multiple holes, and the pore size (the average pore size or the single pore size) ranges from 0.05 µm to 500 µm, all of which belong to the protection scope of the disclosure.

The effects of the disclosure are described in more detail below with reference to Embodiments 1 to 3 and Comparative Examples 1 to 2. In addition, although the following Embodiments 1 to 3 are described, details of materials used, procedures, etc. may be appropriately changed without departing from the scope of the disclosure. Therefore, the disclosure should not be limitedly interpreted by Embodiments 1 to 3 described below.

### <Comparative Example 1>

The metal aluminum foil was used to cut, and a negative electrode (thickness 0.05 millimeter (mm), size 15 mm×25 mm) was obtained. The graphite slurry was coated on nickel foil (thickness 0.03 mm, size 15 mm×25 mm) and a positive electrode was obtained. Next, arrangement in the order of the negative electrode and the positive electrode was made and put into an electrolytic cell rich in an electrolyte (ionic liquid: aluminum chloride: the molar ratio of 1-ethyl-3-methylimidazolium chloride is 1.8:1), and the aluminum battery of Comparative Example 1 was obtained.

### <Comparative Example 2>

Similar to the preparation method of the aluminum battery of Comparative Example 1, the difference is that the negative electrode was replaced with a titanium expanded mesh, in which the (single) pore size of the hole was 1,500 µm, so as to obtain the aluminum battery of Comparative Example 2.

### <Comparative Example 3>

The metal aluminum foil was used to cut, and a negative electrode (thickness 0.05 mm, size 88 mm×148 mm) was obtained. The graphite slurry was coated on nickel foil (thickness 0.03 mm, size 85 mm×145 mm), and a positive electrode was obtained. The separator was prepared by cutting glass fiber filter paper. Next, arrangement in the order of the negative electrode, the separator and the positive electrode was made and put into an aluminum plastic film before being injected with the electrolyte (ionic liquid: aluminum chloride: the molar ratio of 1-ethyl-3-methylimidazolium chloride is 1.8:1) and packaged, and the aluminum battery of Comparative Example 3 was obtained.

### <Embodiment 1>

Similar to the preparation method of the aluminum battery of Comparative Example 1, the difference is that the negative electrode is replaced with anodic aluminum oxide (AAO) (which may correspond to the structure of FIG. 1A), in which the (average) pore size of the hole is 0.1 µm to 0.2 µm, so as to obtain the aluminum battery of Embodiment 1.

### <Embodiment 2>

Similar to the preparation method of the aluminum battery of Comparative Example 1, the difference is that the negative electrode is replaced with a nickel mesh (which may correspond to the structure of FIG. 1B), in which the (single) pore size of the hole is 27 µm, so as to obtain the aluminum battery of Embodiment 2.

### <Embodiment 3>

Similar to the preparation method of the aluminum battery of Comparative Example 3, the difference is that the negative electrode is replaced with AAO, in which the pore size of the hole is 0.1 µm to 0.2 µm, so as to obtain the aluminum battery of Embodiment 3.

Here, other unspecified composition and specifications of the aluminum battery may be obtained by those of ordinary skill in the field to which the disclosure pertains according to any covered content included in the spirit and scope of the attached claims.

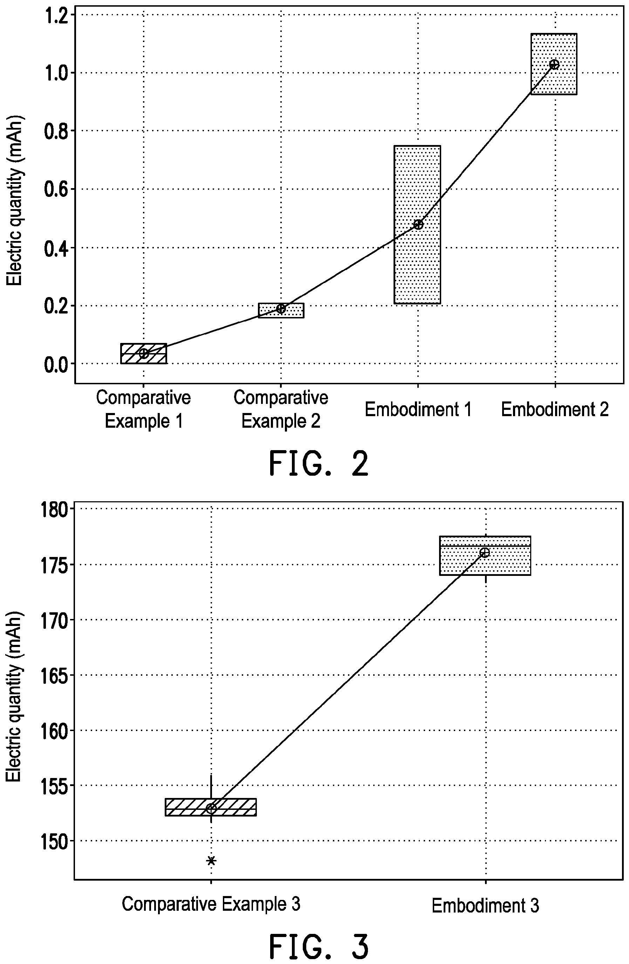

FIG. 2 is a schematic diagram of the results of Embodiment 1, Embodiment 2, Comparative Example 1 and Comparative Example 2 in terms of electric quantity. FIG. 2 shows the charge and discharge testing of the aluminum batteries of Embodiments 1 and 2 and Comparative Examples 1 and 2 respectively performed by using BioLogic's electrochemical workstation (BioLogic BCS-815), and the maximum discharge capacity was measured at a charge and discharge rate of 4C. FIG. 3 is a schematic diagram of the results of Embodiment 3 and Comparative Example 3 in terms of electric quantity. FIG. 3 shows the charge and discharge testing of the aluminum batteries of Embodiment 3 and Comparative Example 3 respectively performed by using Chen Tech Electric's charge and discharge machine (CTE-BT2000-5V50A), and the maximum discharge capacity was measured at a charge and discharge rate of 4C.

The results in FIG. 2 show that through Embodiments 1, 2 and 3 with holes on the surface of the negative electrode, the reaction capability of the metal negative electrode may be effectively improved, thereby increasing the discharge capacity of the aluminum battery. In addition, compared with Comparative Example 1 through Embodiments 1 and 2, the reaction performance (electric quantity) of the negative electrode itself may be increased by 3 times to 17 times. In addition, it may be seen from the comparison of Embodiments 1 and 2 with Comparative Example 2 that when the pore size of the hole of the metal negative electrode is too large, the percentage of the opening area of the overall material is too large, thereby reducing the reactive sites and reducing the electric quantity. The results in FIG. 3 show that when the negative electrode structure with holes is combined with the separator to form a battery cell, the electric quantity of the battery cell may be increased by 15% after the reaction area of the negative electrode and the replenishment speed of the electrolyte are increased.

In summary, the negative electrode structure applied to the aluminum battery of the disclosure may increase the reaction area on the surface of the negative electrode and the replenishment speed of the electrolyte through the design of holes. Therefore, the electrochemical reaction capability of the negative electrode may be improved, and at the same time the problem of metal deposition in the separator may be slowed down, which in turn may improve the electric quantity, life and performance of the aluminum battery.

## Claims

1. A negative electrode structure (100, 100A), applied to an aluminum battery, the negative electrode structure (100, 100A) comprising:
a metal base (110); and
a plurality of holes (120), disposed on a surface of the metal base (110), wherein a pore size of each of the plurality of holes (120) ranges from 0.05 micrometers (µm) to 500 µm.

2. The negative electrode structure (100, 100A) according to claim 1, wherein a material of the metal base (110) comprises aluminum, nickel, copper, titanium, tin, zinc, stainless steel, alloys thereof or combinations thereof.

3. The negative electrode structure (100, 100A) according to claim 2, wherein the material of the metal base (110) is aluminum.

4. The negative electrode structure (100, 100A) according to claim 3, wherein the plurality of holes (120) are made by corrosion.

5. The negative electrode structure (100, 100A) according to claim 4, wherein the plurality of holes (120) have different sizes, and the pore size is an average pore size.

6. The negative electrode structure (100, 100A) according to claim 5, the average pore size ranges from 0.1 µm to 0.2 µm.

7. The negative electrode structure (100, 100A) according to claim 1, wherein a material of the metal base (110) is nickel.

8. The negative electrode structure (100, 100A) according to claim 7, wherein the plurality of holes (120) are made by electroplating or electroforming deposition.

9. The negative electrode structure (100, 100A) according to claim 8, wherein the negative electrode structure (100, 100A) is a mesh structure.

10. The negative electrode structure (100, 100A) according to claim 8, wherein the plurality of holes (120) have substantially the same size.

## Amended claims

### Amended claims in accordance with Rule 137(2) EPC.

1. A negative electrode structure (100, 100A), applied to an aluminum battery, the negative electrode structure (100, 100A) comprising:
a metal base (110); and
a plurality of holes (120), disposed on a surface of the metal base (110), wherein a pore size of each of the plurality of holes (120) ranges from 0.05 micrometers (µm) to 500 µm,
wherein the negative electrode structure is **characterized in that**
the plurality of holes (120) are made by electroplating or electroforming deposition, and the plurality of holes (120) have substantially the same size.

2. The negative electrode structure (100, 100A) according to claim 1, wherein a material of the metal base (110) comprises aluminum, nickel, copper, titanium, tin, zinc, stainless steel, alloys thereof or combinations thereof.

3. The negative electrode structure (100, 100A) according to claim 2, wherein the material of the metal base (110) is aluminum.

4. The negative electrode structure (100, 100A) according to claim 1, wherein a material of the metal base (110) is nickel.

5. The negative electrode structure (100, 100A) according to claim 1, wherein the negative electrode structure (100, 100A) is a mesh structure.
